# EUROPEAN PATENT APPLICATION

(11) **EP 4 316 227 A1**
(43) Date of publication of application: **07.02.2024**
(21) Application number: 22774813.4
(22) Date of filing: 18.02.2022
(51) Int. Cl.: A01B 63/00

(54) **DISPLAY DEVICE FOR TRACTOR**

(30) Priority: 26.03.2021 JP 2021054414
(71) Applicant: Yanmar Holdings Co., Ltd., Osaka-shi, Osaka, 530-0013 (JP)
(72) Inventor: UENO, So, Okayama-shi, Okayama 702-8515 (JP); MIWA, Toshiyuki, Okayama-shi, Okayama 702-8515 (JP); KAWAI, Susumu, Osaka-shi, Osaka 530-0013 (JP)
(74) Representative: Dennemeyer & Associates S.A.
(86) International application number: PCT/JP2022/006656
(87) International publication number: WO 2022/202013

(57) **Abstract**

Provided is a display device for a tractor that displays states of a work machine connected to the tractor in an easy-to-understand manner. The present invention is configured to have: a work machine display section D1 indicating an operational state of a work machine 100 at the center of a screen of a display 210; a depth display section D3 showing a work depth of the work machine 100 in a region on the right side of the display region of the work machine display section D1; an inclination display section D4 showing the inclination of the work machine 100 in a region below the display region of the work machine display section D1; various sensors for detecting states of the work machine such as the operational state of the work machine 100, the work depth of the work machine, and the inclination of the work machine; switches C1-C5 for switching the display contents on the screen; and a control unit for controlling the display sections D1-D4, the sensors, and the switches C1-C5.

## Description

### TECHNICAL FIELD

The present invention relates to a display device for tractors that allows display of a state of a working machine to be fitted to a tractor.

### BACKGROUND ART

To a tractor, a machine for farm work, such as a tilling harrow, is fitted as a working machine. The machine for farm work to be fitted to a tractor is generally fitted to the back of a tractor so as to do farm work. Consequently, a worker needs to look rearward in order to visually check a state of the machine for farm work on the back of the tractor. In this regard, some display device or other can be used to display the state of the machine for farm work nearby the worker so as to perform an operation to check the state of the machine, leading to a more accurate farm work.

Patent Literature 1 discloses a remote control system for a machine for farm work, in which system an operation display screen on a touch panel is changed for each working machine type so as to allow operation of different working machines.

Patent Literature 2 has proposed a display device that displays a state of a working machine, such as a tilling harrow, coupled to the back of a tractor, the state being exemplified by a housed state, a standby state, and a state of depth, tilt or the like of the working machine at work.

### CITATION LIST

### Patent Literature

Patent Literature 1: JP 2011-142884 A
Patent Literature 2: JP 2020-74750 A

### DISCLOSURE OF INVENTION

### PROBLEMS TO BE SOLVED BY THE INVENTION

In Patent Literature 1, the operation display screen corresponds to each machine type indeed, but display of the change in state of the machine for farm work to be fitted to a tractor is in no way described.

Patent Literature 2 leaves room for improvement with respect to the plainness of display, the understandability of corresponding operations, and the like.

The present invention has been made in view of the problems as above, and is aimed at providing a display device for tractors that is capable of plainly displaying a state of a working machine coupled to a tractor.

### MEANS FOR SOLVING THE PROBLEMS

A display device for tractors according to the present invention is a display device for tractors that is to display, on a screen, various kinds of information on a working machine coupled to a tractor, and includes: a working machine display section that displays a functioning situation of the working machine on the screen; a depth display section that displays a working depth of the working machine in a region on left or right of the working machine display section; a tilt display section that displays a tilt of the working machine in a region above or below the working machine display section; and a controller that controls each of the display sections.

In this display device for tractors, the working machine has an opening and closing part, and the functioning situation of the working machine displayed by the working machine display section includes at least one out of a working machine opened state where the opening and closing part has been opened, a working machine opening or closing state where the opening and closing part is being opened or closed, and a working machine closed state where the opening and closing part has been closed.

This display device for tractors includes a work type display section that displays a type of a work done by the working machine in another region on left or right of the depth display section.

In this display device for tractors, the working machine has a pressed portion that is to be pressed, and the display device for tractors includes a pressed state display section that displays a pressed state of the pressed portion if a part of the working machine display section corresponding to the pressed portion is selected.

In this display device for tractors, the opening and closing part of the working machine includes multiple opening and closing parts, and the display device for tractors includes a working machine operation display section in an upper, lower, left or right region of the screen, the working machine operation display section including at least one out of a locked state operation part to select and set a locked state or a released state of opening and closing of the opening and closing part, an opening and closing part selection and operation part to selectively set an opening and closing part to be opened or closed among the multiple opening and closing parts, and an opening and closing operation part to open and close the opening and closing part.

In addition, a display device for tractors according to the present invention is a display device for tractors that is to display, on a screen, various kinds of information on a working machine coupled to a tractor and having an opening and closing part, and includes: a working machine display section that displays a functioning situation of the working machine in a central portion of the screen; a depth display section that displays a working depth of the working machine in a region on left or right of the working machine display section; a work type display section that displays a type of a work done by the working machine in another region on the right or the left of the working machine display section; a tilt display section that displays a tilt of the working machine in a region above or below the working machine display section; a working machine operation unit that operates the working machine in another region below or above the working machine display section; a pressed state display section that displays a pressed state of a pressed portion of the working machine in the another region below or above the working machine display section; and a controller that controls each of the display sections.

### EFFECT OF THE INVENTION

According to the present invention, a display device for tractors that is to display, on a screen, various kinds of information on a working machine coupled to a tractor includes a working machine display section that displays a functioning situation of the working machine in a central portion of the screen, a depth display section that displays a working depth of the working machine in a region on the left or the right of the working machine display section, a tilt display section that displays a tilt of the working machine in a region above or below the working machine display section, and a controller that controls each of the display sections, so as to plainly display a state of the working machine coupled to a tractor on the screen.

### BRIEF DESCRIPTION OF DRAWINGS

FIG. 1 is a side view illustrating a tractor and a working machine according to the present invention.
FIG. 2 is a back elevation illustrating a used (spread or developed) state of the working machine according to the present invention.
FIG. 3 is a back elevation illustrating a housed (folded up) state of the working machine according to the present invention.
FIG. 4 is a back elevation illustrating a state where the working machine according to the present invention is caused to ascend.
FIG. 5 is a block diagram illustrating a configuration of a display device on the whole of the tractor and the working machine according to the present invention.
FIG. 6 is a diagram illustrating a mode (side rakes being opened) of a displayed state on a display according to the present invention.
FIG. 7 is a diagram illustrating another mode (extended rakes being opened) of the displayed state on the display according to the present invention.
FIG. 8 is a diagram illustrating a modification of the displayed state on the display according to the present invention.
FIG. 9 is a diagram illustrating yet another mode (the side rakes being halfway opened or closed) of the displayed state on the same display.
FIG. 10 is a diagram illustrating yet another mode (the side rakes being closed) of the displayed state on the same display.
FIG. 11 is a flowchart illustrating a flow of action of a display device according to the present invention.
FIGS. 12(A) through 12(C) are transition diagrams illustrating a function of an opening and closing operation part according to the present invention.

### DESCRIPTION OF EMBODIMENTS

### <Embodiments>

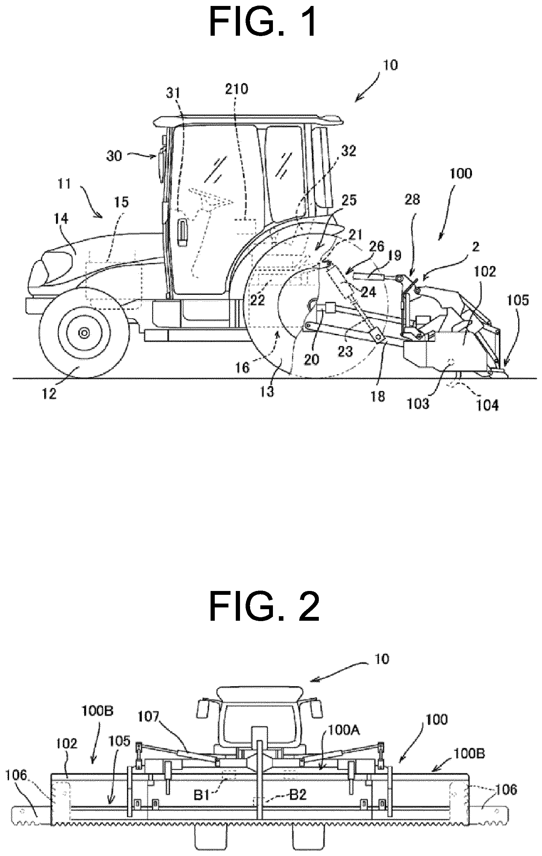

An embodiment of the invention is described with reference to the drawings. FIG. 1 is a side view illustrating a tractor 10 and a working machine 100 according to the embodiment of the present invention.

### 1. [Configuration of Tractor]

The tractor 10 illustrated in FIG. 1 has the working machine 100, such as a rotary, a harrow, a loader, a plow, and a box scraper, fitted to a vehicle body 11 as required, so as to do various works with the working machine 100 as supported by the vehicle body 11. FIG. 1 illustrates an example where a harrow for tilling is used as the working machine 100. In the following description, "the left side" and "the right side" as simply mentioned are assumed to refer to the left side and the right side in an advancing direction of the tractor 10, respectively.

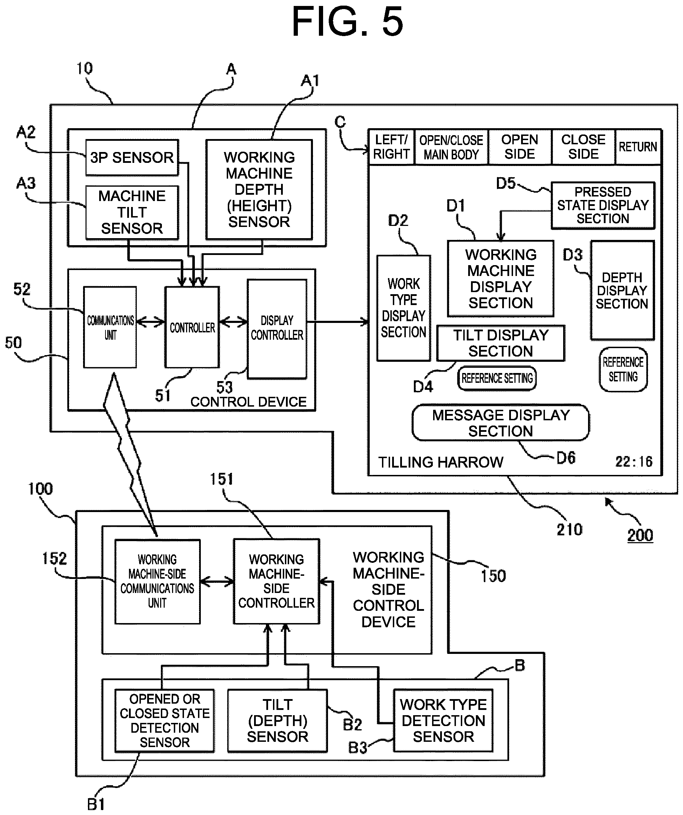

As illustrated in FIGS. 1 and 5, the tractor 10 has a rough configuration including the vehicle body 11, left and right front wheels 12 as a pair, left and right rear wheels 13 as a pair, a cabin 30, a control device 50, a tractor-side sensor A, and a display device 200 including a display 210. A hood 14 is arranged in a front portion of the vehicle body 11, and an engine 15 is arranged inside the hood 14.

Between the left and right rear wheels 13 as a pair, a transmission case 16 is arranged. An output from the engine 15 is transmitted to the front wheels 12 and the rear wheels 13 through gear shift by a hydraulic gearbox or the like not illustrated that is arranged in the transmission case 16.

In a rear portion of the transmission case 16, left and right lower links 18 are arranged as a pair, and a single top link 19 is also arranged. In addition, a power take-off (PTO) shaft 20 is so arranged as to protrude from the rear portion of the transmission case 16. The working machine 100 is coupled to the lower links 18 and the top link 19 and driven by the PTO shaft 20.

In a rear portion of the vehicle body 11, a working machine elevation mechanism 25, a working machine angle change mechanism 26, and a coupling member 28 are provided.

The working machine elevation mechanism 25 includes left and right lift arms 21 as a pair, and a lift cylinder (working machine elevator) 22 formed as a hydraulic cylinder. A tip portion of one of the left and right lift arms 21 is coupled to one lower link 18 through a linking member 23, while a tip portion of the other lift arm 21 is coupled to the other lower link 18 through a rolling cylinder 24 to be described later. Such configuration makes it possible to change the height, at which the working machine 100 is supported by the vehicle body 11, by driving the lift cylinder 22.

The working machine angle change mechanism 26 includes the rolling cylinder 24, which is formed as a hydraulic cylinder. The rolling cylinder 24 is so arranged as to couple the right lift arm 21 and the right lower link 18 to each other. Such configuration makes it possible to change a tilted posture in a left and right direction of the working machine 100 supported by the vehicle body 11, by driving the rolling cylinder 24.

The coupling member 28 is a member for coupling the lower links 18 and the top link 19 to the working machine 100.

The cabin 30, into which an operator is to get, is arranged above the transmission case 16 and in rear of the hood 14. In the cabin 30, a meter panel 31 allowing the display of a traveling speed, an engine speed, a state of the working machine, a warning lamp, and the like is provided. Such information may be displayed on the display 210, which is arranged at the cabin 30.

A drier seat 32 is also provided in the cabin 30, and various operation tools are provided in the vicinity of the driver seat 32.

The working machine 100 is a harrow for tilling. The tilling refers to a work of breaking soil and flattening a surface of a rice field (farm field) after irrigating the rice field.

As illustrated in FIG. 1, the working machine 100 includes a coupling part 2 for coupling the coupling member 28 provided in the rear portion of the vehicle body 11 and the working machine 100 to each other. The coupling part 2 may be joined to the lower links 18 and the top link 19 not through the coupling member 28 but directly.

In rear of the coupling member 28, a plow cover 102 is provided. A plow rotation shaft 103 is rotatably attached to the plow cover 102. The plow rotation shaft 103 is rotated by power transmitted from the PTO shaft 20 through a power transmission mechanism not illustrated, about a rotation axis extending in the left and right direction. To the plow rotation shaft 103, multiple plowing claws 104 are so joined as to line up in the left and right direction. The plowing claws 104 are rotated along with the plow rotation shaft 103 so as to break soil of a rice field.

In a lower rear portion of the plow cover 102, a soil preparation plate (also referred to as "rake") 105 is arranged. The soil preparation plate 105 is attached to the plow cover 102 rotatably about a rotation axis. The soil preparation plate 105 is urged and pressed downward by an urging member not illustrated (a hydraulic cylinder or an electric motor, for instance). Such configuration makes it possible to flatten the surface of a rice field. As illustrated in FIG. 2, extended soil preparation plates (also referred to as "side rakes") 106 for expanding a soil preparation width are provided on the outside in the left and right direction of the soil preparation plate 105.

2. [Configurations of Tractor-Side Control Device and Tractor-Side Sensor] The control device 50 includes a controller 51, a communications unit 52, and a display controller 53. The tractor-side sensor A includes a working machine depth (height) sensor A1, a 3P sensor A2, and a tilt sensor A3 for the tractor 10.

### (Tractor-Side Control Device)

Inputs to the controller 51 are connected to respective outputs from the working machine depth (height) sensor A1, the 3P sensor A2, and the tilt sensor A3 as mentioned above, which constitute the tractor-side sensor A.

### (Tractor-Side Sensor)

The working machine depth (height) sensor A1 is a sensor for detecting the height of the working machine 100, namely, a sensor for detecting a position of a cylinder rod of the lift cylinder 22 (a length of the lift cylinder 22), for instance.

The 3P sensor A2 is a sensor that detects an amount of extension/retraction of a hydraulic cylinder for horizontal control, and uses a lower link for raising the working machine 100 such as a rotary, a top link for deciding a posture in a front and rear direction of the working machine 100, and the hydraulic cylinder for horizontal control to find how horizontal or tilted the working machine 100 is as a whole with respect to the tractor 10.

The tilt sensor A3 is a sensor for detecting a tilt of the tractor 10, to be specific, the tilt of the tractor 10 to the ground.

The controller 51 controls an electromagnetic valve arranged between the lift cylinder 22 and a hydraulic pump so as to perform control to change the height (working machine height), at which the working machine 100 is supported by the vehicle body 11. The working machine height can be divided into two, namely, a descent position that chiefly refers to a height when a work is done on a farm field, and an ascent position higher than the descent position that chiefly refers to a height of the working machine 100 during the travel. The controller 51 also controls an electromagnetic valve arranged between the rolling cylinder 24 and a hydraulic pump so as to perform control to change the tilted posture in the left and right direction of the working machine 100.

The communications unit 52 performs a process for communicating with a communications unit 152 of a working machine-side control device 150 provided on the working machine 100. The communications unit 52 may achieve wired communications, or wireless communications as in the present embodiment. The control device 50 is thus able to receive information from the working machine-side control device 150.

The display controller 53 performs control to display information concerning the working machine 100, for instance, on the display 210 or the like.

### 3. [Configuration of Working Machine]

The working machine 100 includes the working machine-side control device 150 and a working machine-side sensor B.

The working machine-side control device 150 includes a working machine-side controller 151 and the working machine-side communications unit 152.

The working machine-side controller 151 collects data from the working machine-side sensor B and sends the collected data off to the control device 50 on the tractor 10 side by wireless communications through the working machine-side communications unit 152.

The working machine-side communications unit 152 performs a process for communicating with the communications unit 52 on the tractor side. A communications method of the communications unit 52 may be a method for achieving wired communications such as Controller Area Network (CAN) communications or a method for achieving wireless communications such as Wireless Fidelity (Wi-Fi) and Bluetooth. In the present embodiment, information is sent and received by wireless communications.

The working machine-side sensor B includes various sensors, and includes an opened or closed state detection sensor B1 and a soil preparation plate rotation angle sensor (hereinafter referred to as "tilt (depth) sensor B2") in the present embodiment, as will be detailed later. In the present embodiment, the information to be transmitted to the control device 50 is exemplified by the sort of the working machine 100 (such as a rotary and a harrow), a special function of the working machine 100 (presence or absence of a housing function, for instance), a value detected by the opened or closed state detection sensor B1, and a value detected by the tilt (depth) sensor B2, with such sensors B being detailed later.

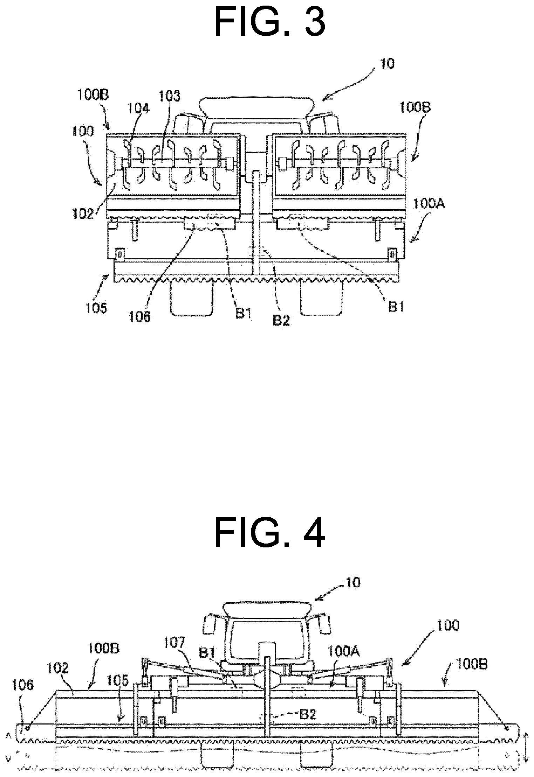

As illustrated in FIGS. 2 and 3, the working machine 100 is so formed as to be openable.

Specifically describing, the working machine 100 is of a structure divided into three, that is to say, includes a central plow 100A and left and right lateral plows 100B. The central plow 100A and the lateral plows 100B are each provided with the plow cover 102, the plow rotation shaft 103, the plowing claws 104, and the soil preparation plate 105. The lateral plows 100B are each pivotably joined to the central plow 100A through a pivot member not illustrated. Specifically, the lateral plows 100B are each pivotably coupled to the central plow 100A by a hinge part constituting an opening and closing means including an opening and closing drive device. A locking mechanism is attached to the hinge part, and a state where the lateral plows 100B are opened or housed is fixed (locked) by the locking mechanism.

In addition, the central plow 100A is joined to the lateral plows 100B by opening and closing cylinders 107. Extension and retraction of the opening and closing cylinders 107 allow the change in state of the working machine 100 between a housed state (FIG. 3) and a used state (FIG. 2). The housed state refers to a state where the two lateral plows 100B are located above the central plow 100A, that is to say, the two lateral plows 100B are folded up and housed. The used state refers to a state where the two lateral plows 100B are located outside the central plow 100A in the left and right direction so as to expand a working width. In the used state, the lift cylinder 22 illustrated in FIG. 1 is caused to act so as to make the working machine 100 descend before a work is done by the working machine 100 on a farm field (in a position illustrated in a lower portion of FIG. 4 with a two-dot chain line).

### (Working Machine-Side Sensor)

As illustrated in FIG. 5, on the working machine 100, the state detection sensor B1, the soil preparation plate rotation angle sensor (tilt (depth) sensor B2), and a work type detection sensor B3 are provided as the working machine-side sensor B.

The state detection sensor B 1 is a sensor for detecting whether the working machine 100 is in the housed state or the used state (that is to say, whether the lateral plows 100B are spread). The state detection sensor B1 is a limit switch that is in contact with either plow if the lateral plows 100B have come into the housed state, so as to apply an electric current. The state detection sensor B1 is arranged on the left and the right as a pair, so that it is possible to detect states of the left and right lateral plows 100B separately.

The tilt (depth) sensor B2 detects a rotation angle of the soil preparation plate 105 (that is to say, detects to what extent the soil preparation plate 105 has moved upward or downward during the soil preparation). The tilt (depth) sensor B2 is a potentiometer for detecting a rotation angle of a link attached to the soil preparation plate 105 or its rotation shaft, for instance.

The work type detection sensor B3 detects which among selectable types of works is set to be done. In the present embodiment for instance, two types of works, "tilling" and "hilling", are selectable. For the selection of these two types of works, a worker, for instance, manually selects a work operation button provided on an operation panel near the meter panel 31 of the tractor 10, so as to set either work. In such configuration, the work type detection sensor B3 detects output of a selection signal accompanying the manual operation for selection, so as to detect which work is currently set.

In the present invention, a value detected by the state detection sensor B1 may not be transmitted to the control device 50 as it is, and the working machine-side controller 151 of the working machine-side control device 150 may determine whether the working machine 100 is in the housed state or the used state, so as to transmit the result of the determination to the control device 50. It is also possible to perform an arithmetical operation using a trigonometric function or the like, for instance, so as to mathematically calculate a plowing depth on the working machine 100 side from an angle of tilt and the like based on data from the tilt (depth) sensor B2. If such depth related to the working machine 100 is calculated, data on the depth may be transmitted to the control device 50. The above structure, which is constituted of the three sensors (the state detection sensor B1, the soil preparation plate rotation angle sensor (tilt (depth) sensor B2), and the work type detection sensor B3), is an example for the working machine-side sensor B, and a different structure may be applied. For instance, the state detection sensor B1 may detect rotation angles of pivots of the lateral plows 100B or extension/retraction lengths of the opening and closing cylinders 107. Apart from the present embodiment, the working machine-side sensor B of the present invention may also include a leftward and rightward tilt detection sensor for detecting a tilt in the left and right direction of the working machine 100. If the leftward and rightward tilt detection sensor is provided on the working machine 100, information on the detected leftward or rightward tilt can be displayed on the display 210 of the display device 200.

### 4. [Configuration of Display Device]

Next, the display device 200 for tractors of the present embodiment is described with reference to FIG. 5.

### 4.1 (Configuration of Display Device)

FIG. 5 is a block diagram illustrating a general configuration of the display device according to the embodiment of the present invention.

The display device 200 of the present embodiment has a rough configuration including, on the tractor 10 side, the control device 50, the tractor-side sensor A, and the display 210 as described above, and including, on the working machine 100 side, the working machine-side control device 150 and the working machine-side sensor B.

The above components except the display 210 have already been described, so that description on such components is omitted and the display 210 is only described below.

### 4.2 (Configuration of Display)

The display 210 of the present embodiment is of a touch panel type and includes a working machine display section D1, a work type display section D2, a depth display section D3, a tilt display section D4, a pressed state display section D5, a message display section D6, and a working machine operation display section C, and the display controller 53 provided on the above control device 50 controls such display sections and operation parts.

In the present embodiment, the display 210 of the display device 200 has the following figuring parts as display parts corresponding to various devices included in the tractor 10 and the working machine 100.

That is to say, the display has:
1) a tractor figuring part T corresponding to the tractor 10;
2) a working machine figuring part I corresponding to the working machine 100;
3) a central plow figuring part CP corresponding to the central plow 100A;
4) lateral plow figuring parts SP corresponding to the lateral plows (opening and closing parts) 100B;
5) a plow cover figuring part PC corresponding to the plow cover 102;
6) a rake figuring part R corresponding to the soil preparation plate (rake) 105;
7) side rake figuring parts ER corresponding to the extended soil preparation plates (side rakes) 106; and
8) hinge part figuring parts H corresponding to the hinge parts, which are to couple the lateral plows 100B to the central plow 100A.

The display 210 has a function to display the sort of a working machine in use in a lower left portion of a screen and display a current time in a lower right portion of the screen, while such function is not indispensable, and a function to display other information may be added.

### 4.2-1 (Working Machine Display Section)

The working machine display section D1 has the working machine figuring part I, which illustrates a functioning situation of the working machine 100 in the center of the screen of the display 210 based on state detection information from the opened or closed state detection sensor B1. In the present embodiment for instance, the lateral plows 100B are openably joined to the working machine 100 coupled to the tractor 10 through the hinge parts each constituting the opening and closing means and, correspondingly to such configuration, the lateral plow figuring parts SP corresponding to the lateral plows 100B, which are in an opened state or a closed state, are displayed in the working machine display section D1. In the present embodiment, the soil preparation plate 105 is provided in a lower portion of the working machine 100 and other soil preparation plates, namely, the extended soil preparation plates 106 are attached to both lateral sides of the soil preparation plate 105, and, correspondingly to such configuration, the rake figuring part R and the side rake figuring parts ER on the left and right sides of the rake figuring part R are displayed in the working machine display section D1.

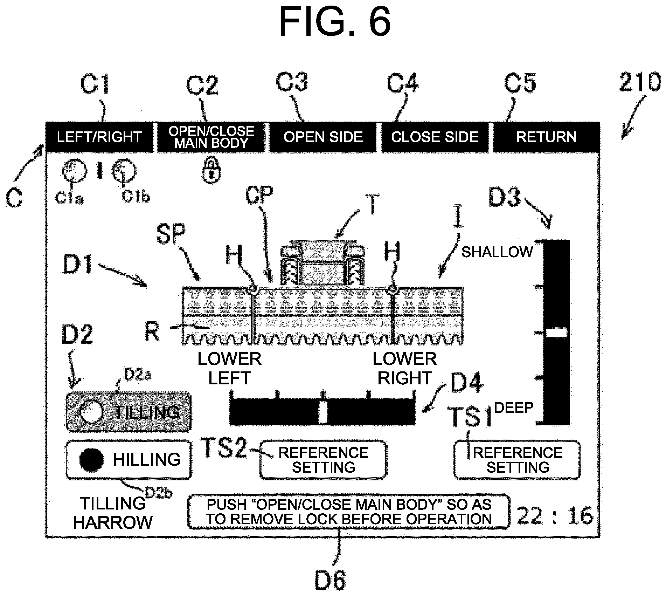

Opened and closed states of the lateral plows 100B and the extended soil preparation plates 106 include the following states. In other words, a state (closed state) where the lateral plows 100B and the extended soil preparation plates 106 have been folded up as illustrated in FIG. 3, a state (opened state) where the lateral plows 100B have been developed as illustrated in FIG. 2, and a state (opened state) where the extended soil preparation plates 106 have been developed as illustrated in FIG. 4 are included. Such states are displayed in the working machine display section D1 with figures similar to the actual machine based on display modes of the lateral plow figuring parts SP and the side rake figuring parts ER. The indicated situation is intuitively and quickly read from a graphical screen display of the display 210 as illustrated in FIGS. 6 through 10.

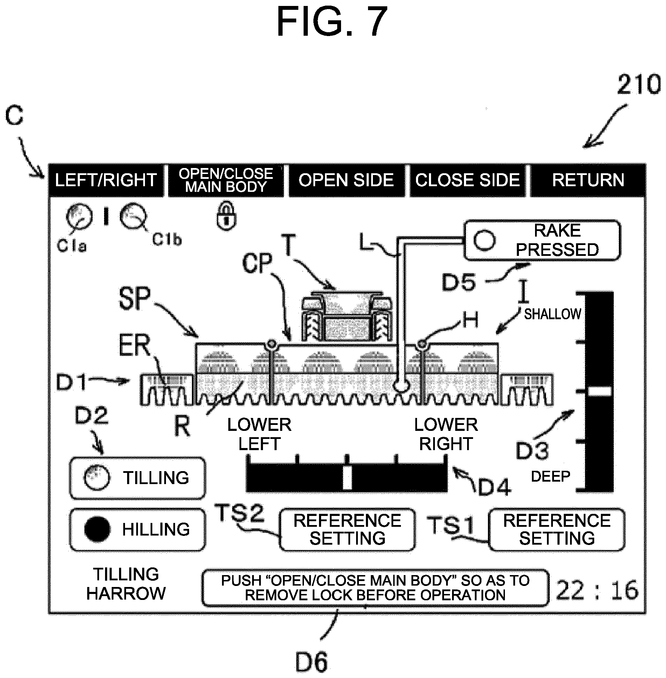

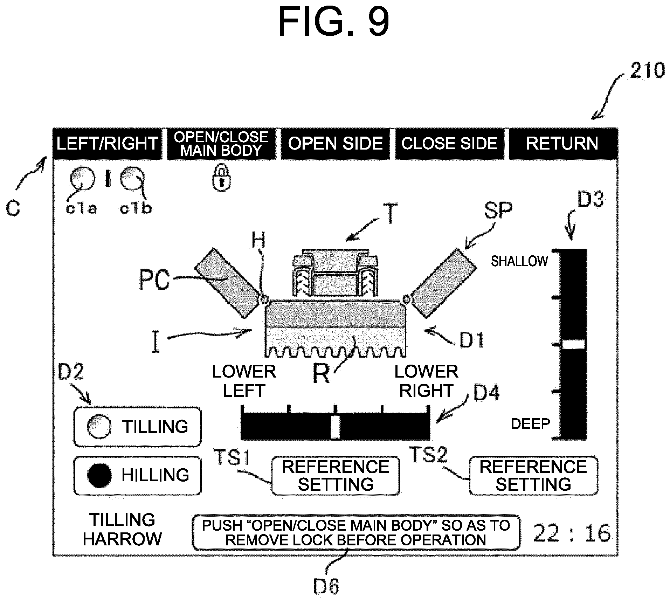

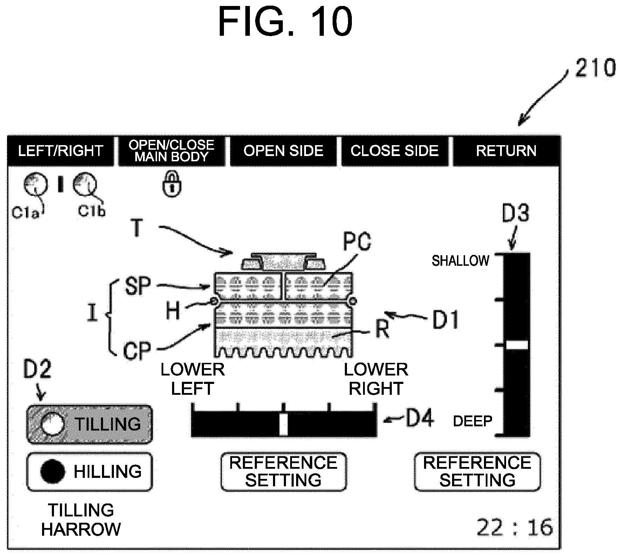

The display mode in the working machine display section D1, which corresponds to the functioning situation of the working machine 100, generally includes the following three modes.
- A working machine opened state where the left and right lateral plows 100B have been opened (see FIGS. 6 and 7).
- A working machine halfway opened or closed state where the left and right lateral plows 100B are being opened or closed (see FIG. 9).
- A working machine closed state where the left and right lateral plows 100B have been closed (see FIG. 10).
These three modes are capable of being displayed in the working machine display section D1.

To be specific: In the working machine opened state, the lateral plow figuring parts SP, which have been opened with respect to the central plow figuring part CP, are displayed as illustrated in FIGS. 6 and 7. In other words, the lateral plow figuring parts SP are displayed on the outside in the left and right direction of the central plow figuring part CP so that a mode where the central plow figuring part CP is extended outward in the left and right direction may be presented.

In the working machine halfway opened or closed state, the lateral plow figuring parts SP, which are in the course of turn around the hinge part figuring parts H with respect to the central plow figuring part CP, are displayed as illustrated in FIG. 9. In other words, display is carried out so that a mode where the lateral plow figuring parts SP rise up to the left and the right of the central plow figuring part CP through the hinge part figuring parts H may be presented.

In the working machine closed state, the lateral plow figuring parts SP, which have been closed with respect to the central plow figuring part CP, are displayed as illustrated in FIG. 10. In other words, display is carried out so that a mode where the left and right lateral plow figuring parts SP lie on the central plow figuring part CP and assume a rectangular shape integrally with the central plow figuring part CP may be presented.

Thus, based on the display modes (display position, display angle, and the like) of the lateral plow figuring parts SP on the display 210 with respect to the central plow figuring part CP through the hinge part figuring parts H, opened and closed states and a halfway opened or closed state of the lateral plows 100B in the working machine 100 are each displayed according to an action mode in the actual machine. The present embodiment is not limited to a configuration for displaying all of the three modes as above, and at least one mode among the three modes may be displayed.

### 4.2-2 (Work Type Display Section)

The work type display section D2 displays a selected state transmitted from the working machine 100. In the present embodiment, the work type display section D2 is to display a work type of the working machine 100 in a region on a side of the working machine display section D1 opposite in the left and right direction to the side where the depth display section D3 is provided. In the work type display section D2 of the present embodiment, the two types of works, "tilling" and "hilling", are selectable as illustrated in FIG. 6. In other words, the work type display section D2 has a tilling indicator D2a corresponding to a tilling work and a hilling indicator D2b corresponding to a hilling work. Specifically, the tilling indicator D2a is an indicator with letters "tilling" and an indication "o" at the left of the letters, with the letters and the indication being surrounded with a frame. The hilling indicator D2b is an indicator with letters "hilling" and an indication "o" at the left of the letters, with the letters and the indication being surrounded with a frame.

The work type display section D2 turns on the "o" or colors the whole frame of each of the tilling indicator D2a and the hilling indicator D2b, for instance, so as to represent the selected state of the relevant indicator. On the other hand, an unselected state of the relevant indicator is represented by turning off the "o" or making the whole frame of the relevant indicator colorless. It is also possible as a display mode of the work type display section D2 to display the whole inside of the frame of the selected indicator, the tilling indicator D2a or the hilling indicator D2b, relatively bright as compared with the inside of the frame of the indicator not selected.

With respect to the detection and display of the selection of the two types of works, to do one or the other work may be detected by the work type detection sensor B3 so as to display such selection as is the case with the present embodiment, while, if selection is made with a work selection button or the like not illustrated, which is present on the operation panel near the meter panel 31 of the tractor 10, the work type may be detected from the operation of the selection button so as to output information on the selected and detected work to the display 210.

In the present embodiment, as described above, the worker can manually select the work operation button provided on the operation panel of the tractor 10, so as to mechanically set or change the work type, while the tilling indicator D2a and the hilling indicator D2b, which constitute the work type display section D2, also serve as switches for the respective works in themselves. In other words, the indicators also serve as operation means for actually and mechanically change the work type. If a "hilling switch" is turned to ON in a "tilling" selected state, for instance, the working machine is changed to the hilling work. If a "tilling switch" is turned to ON in a "hilling" selected state, the working machine is changed to the tilling work.

### 4.2-3 (Depth Display Section)

The depth display section D3 displays the working depth of the working machine 100 in a region on the left or the right of the working machine display section D1 based on depth information from the working machine depth (height) sensor A1. As illustrated in FIGS. 6 through 10, the depth display section D3 of the present embodiment is provided on the right as compared with a central portion of the screen, while this section may be on the opposite side. The depth is displayed by a relative, comparative indication method where a reference level is set at the center and an indicator is moved up and down so as to indicate the difference in height from the set level.

Initially, a level to be assumed as a reference for comparison of the depth needs to be set. In the present embodiment, a touch sensor TS1 named "reference setting" is provided near and immediately under the depth display section D3 as illustrated in FIGS. 6 through 9, and the height of the working machine 100 at the time when this sensor TS 1 is touched is set as the reference and stored in a storage not illustrated that is provided inside the display controller 53. In addition, the working machine 100 at that time is assumed to have a depth of zero and the indicator is so displayed on the screen of the display 210 as to agree with the center of graduations.

### 4.2-4 (Tilt Display Section)

The tilt display section D4 calculates the tilt of the working machine 100 based on data from the 3P sensor A2 and the tilt sensor A3 for detecting the tilt of the tractor 10 as described above, and displays tilt information on the working machine 100 obtained from the result of calculation in a region above or below the working machine display section D1. The tilt display section D4 of the present embodiment is provided in a region lower than the central portion of the screen and may be in an upper region. The tilt is displayed not by an angle indication method where the reference level is set to be zero degrees and a leftward or rightward tilt with respect to the set level is indicated as an angle but by a relative numerical value indication method where the working machine is graphically tilted so as to indicate the extent of actual "tilt". Consequently, a horizontal level to be assumed as a reference initially needs to be set.

In the present embodiment, a touch sensor TS2 titled "reference setting" is provided near and immediately under the depth display section D3, and the posture of the working machine 100 at the time when this sensor TS2 is touched is set to be of a tilt of zero as a horizontal level assumed as the reference, and stored in a storage not illustrated that is provided inside the display controller 53. In addition, the state of the working machine 100 at this time is graphically displayed on the screen of the display 210 with the working machine figuring part I, which adopts a horizontal posture.

### 4.2-5 (Pressed State Display Section)

The pressed state display section D5 displays a pressed state of a pressed portion of the working machine 100 and is provided, in the present embodiment, obliquely above the working machine display section D1 as illustrated in FIG. 7. The pressed state display section D5 of the present embodiment is made active if information on a pressed state of the soil preparation plate 105 or the like from a pressure sensor not illustrated is input to the display controller 53, and it is also possible to cause the message display section D6, which is to be described below, to display such a statement as "rake pressed" on the screen in a pop-up manner. At that time, a line L indicating a place on the working machine 100 that is in a pressed state emerges and is displayed as directed to the pressed place in the pressed state display section D5, as illustrated in FIG. 7.

### 4.2-6 (Message Display Section)

The message display section D6 is to automatically display a message for calling attention to an operation, an item for confirmation or the like as required, based on a control signal from the display controller 53 on the tractor 10 side.

### 4.2-7 (Working Machine Operation Unit)

As illustrated in FIG. 6, the working machine operation display section C is, in a region above or below the working machine display section, to be constituted of operation switches for operating the working machine 100. The working machine operation display section C is a menu bar where multiple display parts for operation that are used to cause the working machine 100 to selectively perform a specified action are displayed in series in a transverse direction. In the present embodiment, the working machine operation display section C is provided along a top side of the screen of the display 210. Since the display 210 as used in the present embodiment is of a touch panel type, tab parts of the working machine operation display section C that are provided and displayed in an upper region of the display 210 each serve as a switch.

For the operation switches constituting the working machine operation display section C of the present embodiment, five tabs, namely, a left and right tab C1, a main body opening and closing tab C2, a side opening tab C3, a side closing tab C4, and a return tab C5 are provided side by side as illustrated in FIG. 6, as tab switches having a function to select the left or the right, a function to open and close the main body, a function to open sides, a function to close the sides, and a returning function, respectively in order from the left.

The left and right tab C1 constitutes an opening and closing part selection and operation part as one menu for selecting, in the working machine operation display section C, the opening or the closing to be performed on either or both of the left and right lateral plows 100B of the working machine 100. Specifically, as illustrated in FIG. 6, the left and right tab C1 has a left selection indicator C1a for indicating selection or non-selection of the left lateral plow 100B and a right selection indicator C1b for indicating selection or non-selection of the right lateral plow 100B that are located side by side. In the present embodiment, the left selection indicator C1a and the right selection indicator C1b each have an indication "o" below letters "left" or letters "right", and each have a display mode where the "o" is turned on so as to represent a selected state and the "o" is turned off so as to represent an unselected state, for instance. If a tab corresponding to the left or right lateral plow 100B, which is wanted to be opened or closed, is touched, for instance, a setting state allowing operation by the main body opening and closing tab C2, the side opening tab C3, and the side closing tab C4 is realized for the selected lateral plow 100B. As a display mode of the left selection indicator C1a and the right selection indicator C1b for making it possible to visually recognize the selected lateral plow 100B, the selected indicator may be displayed relatively bright as compared with the indicator not selected.

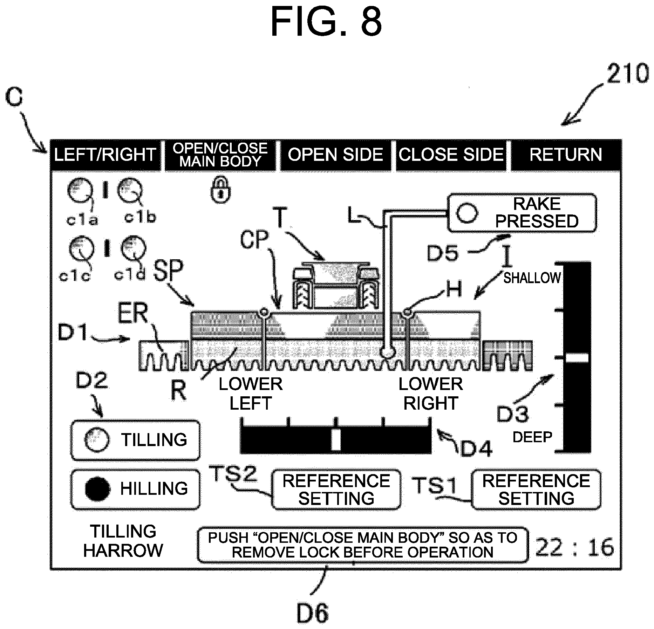

The left and right tab C1 of the present embodiment not only serves as one menu for selecting the opening or the closing to be performed on either or both of the left and right lateral plows 100B of the working machine 100. In FIG. 7, for instance, it is possible to impart similar acting functions and displaying functions with respect to the left and right extended soil preparation plates 106. In that case, a left selection indicator C1c for indicating selection or non-selection of the left extended soil preparation plate 106 and a right selection indicator C1d for indicating selection or non-selection of the right extended soil preparation plate 106 may be provided side by side immediately under the left and right selection indicators C1a and C1b in addition to the latter two indicators as illustrated in FIG. 8, for instance.

The main body opening and closing tab C2 constitutes a locked state operation part serving as a switch for selecting and setting a locking action or a releasing action for the opened and closed states of the lateral plows 100B, which constitute opening and closing parts of the working machine 100. The main body opening and closing tab C2 is operated so as to change a locked state achieved by a locking mechanism for locking opening and closing of the lateral plows 100B to a released state and vice versa.

The side opening tab C3 illustrated in FIG. 6 constitutes an opening and closing operation part and serves as an operation part for opening an extended soil preparation plate 106 selected by an operation of the left and right tab C1. In this regard, "opening" refers to opening (developing) the extended soil preparation plates 106 with respect to the central plow 100A as in FIG. 2. In FIG. 6, for instance, the opening and closing of the lateral plows 100B are carried out by operating subcontrol valves for external oil pressure takeout on the tractor 10 side after the releasing action with the main body opening and closing tab C2 so as to cause the opening and closing cylinders 107 illustrated in FIG. 2 to function.

Similarly, the side closing tab C4 illustrated in FIG. 6 constitutes the opening and closing operation part and serves as an operation part for closing an extended soil preparation plate 106 selected by an operation of the left and right tab C1 (see FIGS. 7 through 9). In this regard, "closing" refers to folding up the extended soil preparation plates 106 by an opening and closing drive device not illustrated with respect to the left and right lateral plows 100B (see FIG. 10) as in FIG. 3.

The tab C5 of "return" is a tab for returning to the previous screen. In other words, this tab has a function to withdraw from a screen displaying working machine information.

### [Functions and Effects of Display Device]

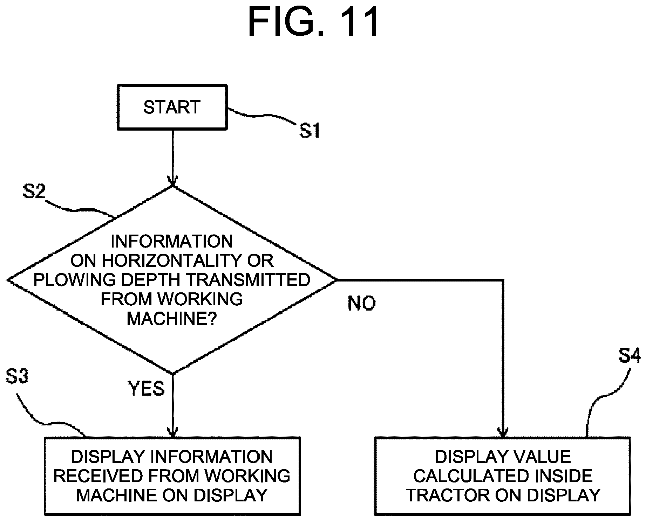

Functions of the display device 200, which has the configuration as above, are described with reference to a flowchart in FIG. 11.

As an example, the worker gets into the tractor 10 and turns on a power source for the tractor 10 (a first step S1).

Then, the control device 50 of the tractor 10 determines whether information on horizontality and the plowing depth is transmitted from the working machine 100, which is coupled to the tractor 10 (a second step S2).

If determining that the above information has been transmitted from the working machine 100, the control device 50 displays the received information on the display 210 of the display device 200 (a third step S3).

If determining that the above information has not been transmitted from the working machine 100, the control device 50 displays data calculated by the controller 51 in the respective display sections of the display 210 (a fourth step S4).

### (Functions and Effects of Working Machine Operation Unit)

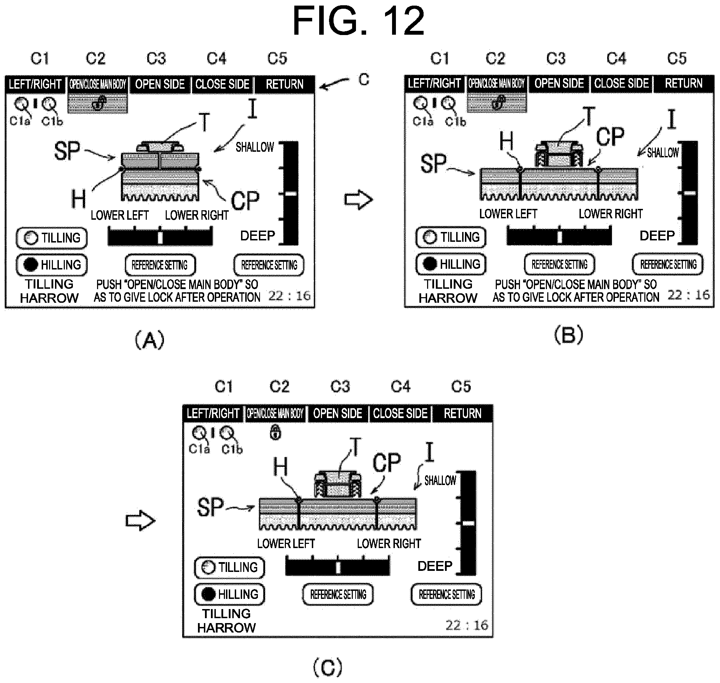

Specific functions and the like of the working machine operation display section C of the display device 200 of the present invention are described with reference to FIG. 12.

If the left and right lateral plows 100B are wanted to be opened (developed), for instance, the following operations are performed.
1) The left and right indicators c1a and c1b of the left and right tab C1 are both to be touched. Such operation makes the left and right lateral plows 100B active in functioning. In this way, a state where a control signal for opening both the left and right lateral plows 100B is waited for is easily set on the display 210 side.
2) Next, the adjacent main body opening and closing tab C2 is to be touched so as to remove the locked state and change the hinge parts as the opening and closing parts, which were in the locked state, to an active state allowing functioning. In this way, a state where input of an opening signal is waited for is easily set on the display 210 side.
3) Then, the subcontrol valves for external oil pressure takeout on the tractor 10 side are to be operated so as to cause the opening and closing cylinders 107 illustrated in FIG. 2 to function, which realizes the opened state, in which the left and right lateral plows 100B turn to be developed around the hinge parts.
4) After the above operations are all performed, a message "push 'open/close main body' so as to give lock after operation" is displayed in the message display section D6. Therefore, lastly, the main body opening and closing tab C2 is to be touched in accordance with such instruction, with a soft touch being only required for the fixation or lock of the opened state of the lateral plows 100B. It is thus possible to easily open the lateral plows 100B by simple operations on the display 210 side.

In the display 210 of the present embodiment, the respective settings are carried out only by touching the display sections, in which the settings are wanted to be carried out, while touching is replaceable by the following operations if the display is different in type from a touch type display. A stick type dial or the like attached beside the display may rotatively be operated so as to move a cursor to each display section on the screen and select the relevant display section in a state of being allowed to be active. With respect to the selected display section, a push button possibly provided in a center of the above dial may be pushed so as to set the display section, which has been selected, to be in an actual functioning state.

The display of the present embodiment is so formed as to not only display various display sections and operation parts as above but display the sort of the working machine in use in a lower left corner of the display 210 and the current time in a lower right corner as illustrated in FIG. 6 and the like. Objects that the screen of the display is to be equipped with are not limited to those described above, and various items and the like can be provided.

The present invention is not limited to the above embodiment but includes a configuration obtained by substituting the configurations disclosed in the above embodiment with one another or differently combining the configurations, and a configuration obtained by substituting publicly known inventions and the configurations disclosed in the above embodiment with one another or differently combining the publicly known inventions and the configurations. In addition, the technical scope of the present invention is not limited to the above embodiment but covers the matters recited in the claims and equivalents thereof.

### DESCRIPTION OF REFERENCE NUMERALS

2 Coupling part
10 Tractor
11 Vehicle body
12 Left and right front wheels as a pair
13 Left and right rear wheels as a pair
14 Hood
15 Engine
16 Transmission case
18 Lower link
19 Top link
20 PTO shaft
21 Lift arm
22 Lift cylinder (working machine elevator)
23 Linking member
24 Rolling cylinder
25 Working machine elevation mechanism
26 Working machine angle change mechanism
28 Coupling member
30 Cabin
31 Meter panel
32 Driver seat
50 Control device
51 Controller
52 Communications unit
53 Display controller
100 Working machine
100A Central plow
100B Lateral plow (opening and closing part)
102 Plow cover
103 Plow rotation shaft
104 Plowing claw
105 Soil preparation plate (rake)
106 Extended soil preparation plate (side rake)
107 Opening and closing cylinder
150 Working machine-side control device
151 Working machine-side controller
152 Working machine-side communications unit
200 Display device
210 Display (screen)
A Tractor-side sensor
A1 Working machine depth (height) sensor
A2 3P sensor
A3 Tilt sensor
A4 Tilt sensor for tractor
B Working machine-side sensor
B1 State detection sensor
B2 Soil preparation plate rotation angle sensor (tilt (depth) sensor)
B3 Work type detection sensor
C Working machine operation display section
C1 Left and right tab (opening and closing part selection and operation part)
C2 Main body opening and closing tab (locked state operation part)
C3 Side opening tab (opening and closing operation part)
C4 Side closing tab (opening and closing operation part)
C5 Return tab
D1 Working machine display section
D2 Work type display section
D3 Depth display section
D4 Tilt display section
D5 Pressed state display section
D6 Message display section
CP Central plow figuring part
ER Extended soil preparation plate figuring part
H Hinge part figuring part
I Working machine figuring part
PC Plow cover figuring part
R Rake figuring part
SP Lateral plow figuring part
T Tractor figuring part

## Claims

1. A display device for tractors that is to display, on a screen, various kinds of information on a working machine coupled to a tractor, the display device for tractors comprising: a working machine display section that displays a functioning situation of the working machine on the screen; a depth display section that displays a working depth of the working machine in a region on left or right of the working machine display section; a tilt display section that displays a tilt of the working machine in a region above or below the working machine display section; and a controller that controls each of the display sections.

2. The display device for tractors according to claim 1, wherein the working machine has an opening and closing part, and the functioning situation of the working machine displayed by the working machine display section includes at least one out of a working machine opened state where the opening and closing part has been opened, a working machine halfway opened or closed state where the opening and closing part is being opened or closed, and a working machine closed state where the opening and closing part has been closed.

3. The display device for tractors according to claim 1 or 2, comprising a work type display section that displays a type of a work done by the working machine in another region on a left side or a right side of the depth display section.

4. The display device for tractors according to any one of claims 1 through 3, wherein the working machine has a pressed portion that is to be pressed, and the display device for tractors comprises a pressed state display section that displays a pressed state of the pressed portion if a part of the working machine display section corresponding to the pressed portion is selected.

5. The display device for tractors according to claim 2, wherein
the opening and closing part of the working machine includes multiple opening and closing parts, and
the display device for tractors comprises a working machine operation display section in an upper, lower, left or right region of the screen, the working machine operation display section including at least one out of a locked state operation part to select and set a locked state or a released state of opening and closing of the opening and closing part, an opening and closing part selection and operation part to selectively set an opening and closing part to be opened or closed among the multiple opening and closing parts, and an opening and closing operation part to open and close the opening and closing part.

6. A display device for tractors that is to display, on a screen, various kinds of information on a working machine coupled to a tractor and having an opening and closing part, the display device for tractors comprising: a working machine display section that displays a functioning situation of the working machine in a central portion of the screen; a depth display section that displays a working depth of the working machine in a region on left or right of the working machine display section; a work type display section that displays a type of a work done by the working machine in another region on the right or the left of the working machine display section; a tilt display section that displays a tilt of the working machine in a region above or below the working machine display section; a working machine operation unit that operates the working machine in another region below or above the working machine display section; a pressed state display section that displays a pressed state of a pressed portion of the working machine in the another region below or above the working machine display section; and a controller that controls each of the display sections.
